# EUROPÄISCHE PATENTANMELDUNG

(11) **EP 0 550 824 A1**
(43) Veröffentlichungstag der Anmeldung: **14.07.1993**
(21) Anmeldenummer: 92120053.1
(22) Anmeldetag: 25.11.1992
(51) Int. Cl.: H04N 3/09, H04N 5/33, G01J 5/06

(54) **Verfahren und Schaltungsanordnung zur Vermeidung von Abbildungsfehlern in Wärmebildgeräten**

(30) Priorität: 10.01.1992 CH 55/92
(71) Anmelder: Siemens Schweiz AG, CH-8047 Zürich (CH)
(72) Erfinder: Fosco, Guido, CH-8957 Spreitenbach (CH)

(57) **Zusammenfassung**

Das Verfahren dient der Vermeidung von Abbildungsfehlern in Wärmebildgeräten, die mindestens einen eingangsseitig mit einem Detektor (D) verbundenen Verstärkerkanal (VKn) aufweisen, welchem Detektor (D) über eine Eingangsoptik (EO) abwechslungsweise in einem Intervall A aus der beobachteten Szene aufgenommene Strahlung (os) und in einem Intervall B ein weiteres optisches Signal zugeführt wird. Der relativ hohe Unterschied der in den Intervallen A und B normalerweise auftretenden Signalpegel führt dabei zu störenden Bildfehlern. Durch schaltungstechnische Massnahmen im Bereich der Verstärkerkanäle (VKn) und durch Massnahmen im optischen Bereich des Wärmebildgerätes gelingt es, die Abbildungsfehler zu beseitigen.

## Beschreibung

Die vorliegende Erfindung betrifft ein Verfahren zur Vermeidung von Abbildungsfehlern in Wärmebildgeräten und eine Schaltungsanordnung zur Durchführung des Verfahrens nach Anspruch 1 bzw. 6.

Wärmebildgeräte bestehen normalerweise aus einer Eingangsoptik, durch die die Infrarotstrahlung eines beobachteten Geländes bzw. einer Szene über ein erstes rotierendes Spiegelsystem bzw. Polygonrad zeilenweise auf einen lichtempfindlichen Detektor geleitet wird, der dieses nichtsichtbare optische Signal in ein dazu proportionales elektrisches Signal umwandelt und an einen Verstärker abgibt, dessen elektrisches Ausgangssignal in ein Sichtbares optisches Signal gewandelt und über das erste oder ein weiteres Polygonrad zeilenweise einem Beobachter zugeführt wird. Dem Detektor wird dabei jeweils in einem Intervall A Infrarotstrahlung aus der beobachteten Szene und in einem Intervall B aus dem vergleichsweise warmen Innnenraum des Wärmebildgerätes abgegebene Infrarotstrahlung zugeführt. Im Intervall A wird dabei eine Bildzeile durch einen ersten Spiegel des Polygonrades abgetastet. Im nachfolgenden Intervall B findet der Übergang zum nächsten Spiegel statt, während dem, gespiegelt an einer Seitenkante des Polygonrades, Strahlung aus dem Geräteinnenraum zum Detektor reflektiert wird.

Der hohe Intensitätsunterschied der dem Detektor von der beobachteten Szene und aus dem Geräteinnenraum zugeführten Infrarotstrahlung führt bei den bisher in diesen Geräten verwendeten Verstärkerschaltungen oft zu Unlinearitäten, aus denen Abbildungsfehler resultieren. Insbesondere werden horizontale und/oder vertikale Helligkeitsgradienten beobachtet, die nicht mit den Temperaturverhältnissen in der beobachteten Szene übereinstimmen. Durch das Umladen einzelner Kondensatoren zwischen den Intervallen A und B können sich z.B. horizontale Helligkeitsgradienten ergeben. Abbildungsfehler treten normalerweise auch auf, falls mehrere Verstärkerkanäle verwendet werden, denen parallel bestimmte Bildzeilen zur Verstärkung zugeordnet werden. Vertikale Helligkeitsgradienten treten z.B. auf, wenn einzelne Kanäle abwechslungsweise mit starken und schwachen Signalen beaufschlagt werden. So z.B., falls eine aus dem relativ kalten Horizont entnommene Zeile von einer Zeile abgelöst wird, die von der aufgewärmten Erdoberfläche stammt. Der Helligkeitsgrad der neuen Zeile wird daher von der Helligkeit der früher aufgenommenen Zeile mitbestimmt. Unterschiede im Übertragungsverhalten der einzelnen Verstärkerkanäle können dabei, insbesondere bei der Korrektur letztgenannter Bildfehler, zu weiteren störenden Bildfehlern (horizontale Streifigkeit) führen.

Der vorliegenden Erfindung liegt daher die Aufgabe zugrunde, ein Verfahren zur Vermeidung von Abbildungsfehlern in mit zwei Intervallen A und B arbeitenden Wärmebildgeräten sowie eine Schaltungsanordnung zur Durchführung des Verfahrens anzugeben, die unabhängig von den vorhandenen internen oder externen Temperaturverhältnissen und der Anzahl verwendeter Verstärkerkanäle eine fehlerfreie Abbildung der beobachteten Szene ermöglichen.

Diese Aufgabe wird durch die im kennzeichnenden Teil des Patentanspruchs 1 bzw. 6 angegebenen Massnahmen gelöst. Vorteilhafte Ausgestaltungen der Erfindung sind in weiteren Ansprüchen angegeben.

Durch das erfindungsgemässe Verfahren und die entsprechende Schaltungsanordnung werden Abbildungsfehler, insbesondere horizontale und vertikale Helligkeitsgradienten, vermieden. Dabei werden durch unlineare Verhaltensweisen einzelner Bauteile und Module verursachte Fehler unabhängig von den Temperaturverhältnissen in der beobachteten Szene oder im Wärmebildgerät kompensiert.

Die Erfindung wird nachfolgend anhand einer Zeichnung beispielsweise näher erläutert. Dabei zeigt:
- Fig. 1: den Aufbau eines bekannten Wärmebildgerätes
- Fig. 2: eine erfindungsgemässe Verstärkerschaltung für Wärmebildgeräte
- Fig. 3: den Strahlengang im Bereich von der Eingangsoptik bis zum Detektor, mit einem Drehspiegel und einem zusätzlichen Eingangsobjektiv
- Fig. 4: den Strahlengang im Bereich von der Eingangsoptik bis zum Detektor, mit einem Drehspiegel und ohne ein zusätzliches Eingangsobjektiv

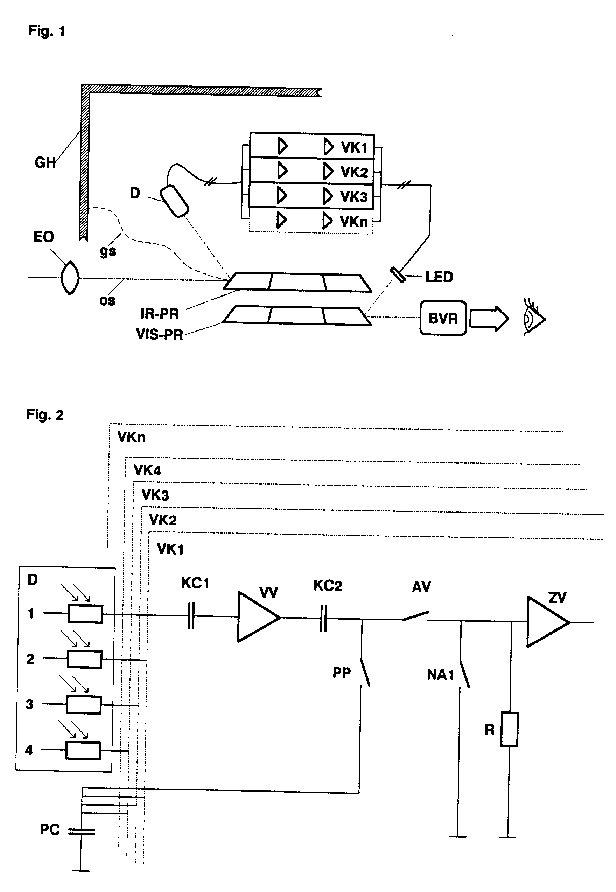

Fig. 1 zeigt den Aufbau eines bekannten Wärmebildgerätes, das einen ersten optischen Teil für Strahlen im IR (infrarot) - Bereich, einen Detektor D mit anschliessenden Verstärkerkanälen VKn und Leuchtdioden LED, einen zweiten optischen Teil für Strahlen im VIS (visibel) - Bereich sowie eine anschliessende Bildverstärkerröhre BVR aufweist. Das Wärmebildgerät ist ferner mit einem Gehäuse GH versehen, welches naturgemäss eine Eigenstrahlung gs abgibt. Im ersten optischen Teil wird die von der beobachteten Szene aufgenommene IR-Strahlung über eine Eingangsoptik EO sowie ein erstes sich drehendes Polygonrad IR-PR zeilenweise zu einem Detektor D gespiegelt, der entsprechend der Anzahl simultan abzutastender Zeilen mit einzelnen vertikal übereinander angeordneten Detektorelementen versehen ist. Die von den Detektorelementen empfangenen optischen Signale werden jeweils in elektrische Signale umgewandelt, die in den Verstärkerkanälen VKn verstärkt und nachfolgend an die Leuchtdioden LED weitergeleitet werden. Das von den Leuchtdioden LED abgegebene sichtbare Licht wird über das erste oder ein weiteres Polygonrad VIS-PR zu einer Bildverstärkerröhre BVR gespiegelt, auf der die beobachtete Szene abgebildet wird und betrachtet werden kann.

Die Aufnahme der Bildinformation vom Beginn einer Zeile bis zum Beginn der nächsten Zeile läuft in zwei Intervallen A, B ab. Im ersten Intervall A wird die von der Szene aufgenommene Strahlung os an einer Seitenfläche des sich kontinuierlich drehenden Polygonrades IR-PR zum Detektor D reflektiert, wodurch eine oder gleichzeitig mehrere Zeilen aus der beobachteten Szene aufgenommen werden. Im nachfolgenden Intervall B wird die aufgenommene Strahlung os im Bereich einer Seitenkante des Polygonrades IR-PR gespiegelt und nicht mehr zum Detektor D reflektiert. Stattdessen gelangt in diesem Intervall B insbesondere vom Gehäuse GH abgegebene Strahlung gs zum Detektor D. Da sich die von der Szene aufgenommene und die vom Gehäuse GH abgegebene Strahlung os bzw. gs in ihrer Intensität normalerweise erheblich unterscheiden, werden den Verstarkerkanälen VKn über die Elemente des Detektors D Signale zugeführt, die stark voneinander abweichende Signalpegel aufweisen. Der Unterschied dieser Signalpegel ist dabei oft um ein Vielfaches höher als die Amplitude des Signals, das zu der aus der Szene aufgenommenen Strahlung os korrespondiert. Unlinearitäten in den Verstärkerkanälen VKn führen dabei beim Wechseln von einem ersten Signalpegel im Intervall A zu einem dazu stark abweichenden Signalpegel im Intervall B zu störenden Bildfehlern. Durch die in den Figuren 2, 3 und 4 gezeigten Massnahmen lassen sich diese Fehler eliminieren.

In Fig. 2 sind Verstärkerkanäle VKn gezeigt, die eingangsseitig mit einem Detektor D und je über einen Schalter PP mit einem Kondensator PC verbunden sind. Die Eingangsstufe der Verstärkerkanäle VKn enthält dabei eingangsseitig einen ersten Koppelkondensator KC1, der das vom Detektor D abgegebene Signal zum Eingang eines Vorverstärkers VV führt, dessen Ausgang über einen zweiten Koppelkondensator KC2 mit dem Schalter PP und über einen Schalter AV mit dem Eingang eines Zwischenverstärkers ZV verbunden ist. Der Eingang des Zwischenverstärkers ZV ist ferner über einen Widerstand R und parallel dazu über einen Schalter NA1 mit Erde verbunden, der während dem Intervall B, in dem kein Nutzsignal zu verstärken ist, geschlossen wird, um den Nullabgleich der Endstufen der Verstarkerkanäle VKn durchzuführen.

Der Schalter AV wird dabei jeweils während dem Intervall B, in dem ein erhöhter Spannungspegel auftritt, geöffnet, um das Umladen des Kondensators KC2 zu verhindern. Dadurch wird verhindert, dass während dem nachfolgenden Intervall A, in dem aus der Szene aufgenommene Bildzeilen verstarkt werden, ein Entladen des Kondensators KC2 und dadurch ein horizontaler Helligkeitsgradient auftritt.

Zur Vermeidung des Auftretens von grösseren Signalpegeln können die Elemente des Detektors D während dem Intervall B z.B. auch durch Widerstände gleicher Grösse ersetzt werden. D.h. während dem Intervall A werden die Koppelkondensatoren KC1 mit den Detektorelementen und während dem Intervall B mit den genannten Widerständen verbunden. Ferner besteht die Möglichkeit, z.B. durch entsprechendes Anlegen eines Magnetfeldes unter Ausnützung des Halleffekts, die Empfindlichkeit der Detektorelemente während dem Intervall B derart herabzusetzen, dass das Auftreten grösserer Signalpegel während dem Intervall B vermieden wird.

Ein einzelner Verstärkerkanal VKn verstärkt dabei jeweils die Signale gleicher Bildzeilennummern. Dem Verstärkerkanal VK1 sind daher z.B. jeweils die Zeilennummern 1, n+1, 2n+1, etc. zugeordnet. Dabei weisen die Signale dieser Zeilen oft stark unterschiedliche Intensitäten auf. Falls die beobachtete Szene oben z.B. einen kalten bzw. strahlungsarmen Horizont und unterhalb des Horizonts z.B. eine warme und daher strahlungsintensive Erdoberfläche aufweist, so werden beim Aufnehmen der Bildzeilen 1 bis n z.B. die Verstärkerkanäle VK1 - VK2 mit schwachen und die Verstärkerkanäle VK3 - VKn mit starken Einganssignalen beaufschlagt. Falls beim Aufnehmen der Bildzeilen n+1 bis 2n nachfolgend alle Verstärkerkanäle VKn mit Signalen gleicher Intensität beaufschlagt werden, sollte bezüglich dieser Zeilen eine homogene Bildwiedergabe erzielt werden. Da die Verstärkerkanäle VK1 - VKn bei der vorhergehenden Aufnahme der Zeilen 1 bis n mit Signalen unterschiedlicher Stärke beaufschlagt waren, weisen die Verstärkerkanäle VK1 - VKn vor Beginn der Aufnahme der Bildzeilen n+1 bis 2n eine unterschiedliche Ausgangslage auf. Statt einer homogenen Bildwiedergabe für die Zeilen n+1 bis 2n erfolgt daher eine Wiedergabe mit einem vertikalen Helligkeitsgradienten. Zur Beseitigung dieses Fehlers wird der Ausgang des Vorverstärkers VV bzw. der Kondensator KC2 jedes Verstärkerkanals VKn während dem Intervall B durch Schliessen des Schalters PP jeweils mit dem Kondensator PC verbunden, der sich dadurch auf eine Spannung auflädt, die dem Mittel aller während dem Intervall B eintreffenden Eingangssignale entspricht. Durch diese Massnahme werden alle Verstärkerkanäle VKn vor dem Beginn der Aufnahme neuer Bildzeilen auf einen einheitlichen Pegel eingestellt. Der allfällig auftretende und mit den Verhältnissen in der beobachteten Szene nicht übereinstimmende vertikale Helligkeitsgradient kann dadurch vermieden werden. Weitere in den Verstärkerkanälen VKn verwendete Kondensatoren (z.B. KC1), deren Restladungen zu Fehlern bei der Bildwiedergabe führen, können selbstverständlich in analoger Weise auf einen einheitlichen Wert eingestellt werden.

Durch das periodische Zuschalten des Kondensators PC werden daher während dem Intervall B jeweils alle Verstärkerkanäle VKn auf einen gemeinsamen zur Gehäusestrahlung gs proportionalen Signalpegel eingestellt. Nach dem Öffnen des Schalters PP und zu Beginn des Intervalles A fällt der Signalpegel am Eingang des Vorverstärkers VV wieder auf einen zu der aus der beobachteten Szene aufgenommenen Strahlung os proportionalen Wert. Falls alle Verstärkerkanäle VKn das gleiche Übertragungsverhalten aufweisen, erfolgt bei homogenen Wärmeverhältnissen in der beobachteten Szene tatsächlich eine homogene Bildwiedergabe. Falls die Verstärkerkanäle VKn bezüglich des Übertragungsverhaltens jedoch Unterschiede aufweisen, entstehen trotz der vorangegangenen Pegelung Inhomogenitäten im wiedergegebenen Bild. D.h., die Verstärkerkanäle VKn fallen nach der auf dem höheren Signalpegel vorgenommenen Pegelung nicht auf gleiche Ausgangslagen zurück. Durch die Pegelung werden daher nicht nur Unterschiede zwischen den Verstärkerkanälen VKn ausgeglichen, die sich aufgrund der früher zugeführten verschiedenartigen Eingangssignalen ergeben haben; sondern auch Abweichungen, die aufgrund verschiedenartiger Übertragungsverhalten der einzelnen Verstärkerkanäle VKn entstanden. Da die Pegelung während dem Intervall B, d.h. während dem Anliegen eines normalerweise sehr hohen Signalpegels erfolgt, der vom Signalpegel des Nutzsignals stark abweicht, ergeben sich sehr hohe Anforderungen an den Gleichlauf aller Verstärkerkanäle VKn. Falls die Eigenschaften der Verstärkerkanäle VKn stark voneinander abweichen, würde die während dem Intervall B vorgenommene Pegelung unter Umständen zu einer noch grösseren Abweichung der Verstärkerkanäle VKn bei anliegendem tieferem Nutzsignal-Pegel während dem Intervall A führen als ohne Pegelung. D.h. mit der Reduktion eines ersten Bildfehlers entstünde ein zweiter, unter Umständen noch grösserer Bildfehler. Mit steigendem Unterschied zwischen den im Intervall A und B an den Eingängen der Verstärkerkanäle VKn anliegenden Signalpegel vergrössern sich dabei die nach der Pegelung im Intervall A auftretenden Abweichungen unter den einzelnen Verstärkerkanälen VKn. Durch den Vollzug der Pegelung an den Randzonen des Intervalles A, d.h. direkt vor oder nach dem Anliegen des Nutzsignals, könnte letztgenannter Fehler vermieden werden. Dies würde jedoch zu einem entsprechenden Verlust von Bildinformation führen. In einem weiteren erfindungsgemässen Schritt wird daher angestrebt, die während den beiden Intervallen A und B vorherrschenden Signalpegel einander möglichst nahe anzugleichen.

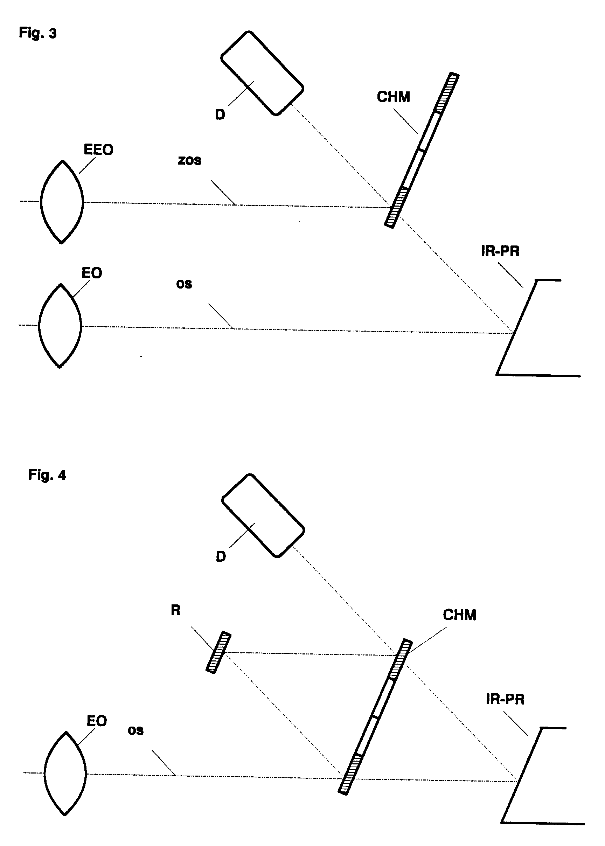

Erfindungsgemäss wird daher gemäss Fig. 3 und 4 vorgesehen, dass dem Detektor D auch während dem Intervall B Strahlung os aus der beobachteten Szene oder dazu äquivalente Strahlung zos zugeführt wird. Vorzugsweise wird die Strahlung os aus der beobachteten Szene während dem Intervall B diffus zum Detektor D gespiegelt, um extreme Temperaturwerte innerhalb der beobachteten Szene auszumitteln. Unterschiede der vom Detektor D in den Intervallen A und B abgegebenen Signale treten daher nicht auf. Zur diffusen Reflektion sind z.B. fresnelllinsenförmige Reflektoren geeignet. Im Gegensatz zum Abgleich der Verstärkerkanäle VKn mit Hilfe einer Referenzstrahlenquelle, wie das z.B. in der DE-PS 20 09 312, Spalte 9, Zeilen 13-61 beschrieben ist, erfolgt die erfindungsgemässe Pegelung immer genau im momentanen Arbeitsbereich der Verstärkerkanäle VKn. Bei Änderungen der mittleren Temperatur der beobachteten Szene erfolgt die Pegelung daher immer mit dem neu anliegenden Signalpegel und nicht mit einer festen Referenztemperatur, die unter Umständen stark von der mittleren Temperatur der beobachteten Szene abweicht. Fehler, die früher beim Wechsel zwischen unterschiedlichen Szenen bzw. Arbeitsbereichen entstanden, entfallen daher. Der Abgleich bzw. die Pegelung oder weitere allenfalls notwendige Einstellungen der Verstärkerkanäle VKn erfolgen daher nicht nur an ein oder zwei Punkten wie bei bekannten Lösungen, sondern kontinuierlich über den gesamten Temperaturbereich der beobachteten Szene.

In Fig. 3 erfolgt, wie bereits eingangs beschrieben, während dem Intervall A die Übertragung der Strahlung os von der Eingangsoptik EO über das Polygonrad IR-PR zum Detektor D. Während dem Intervall B wird der Strahlengang vom Polygonrad IR-PR zum Detektor D durch einen rotierenden Spiegel CHM unterbrochen, der die über eine zweite Eingangsoptik EEO von der beobachteten Szene aufgenommene Strahlung zos zum Detektor D reflektiert. Anstelle der zweiten Eingangsoptik EEO, welche die zusätzlich von der Szene aufgenommene Strahlung zos an den Spiegel CHM übertragt, könnte ferner auch eine geregelte variable Strahlungsquelle vorgesehen werden, durch die eine zur Strahlung os äquivalente Strahlung an den Spiegel CHM abgegeben wird. Die Regelung der variablen Strahlungsquelle erfolgt dabei durch einen Vergleich der vom Detektor D während den beiden Intervallen A und B abgegebenen Signale mit nachfolgender Korrektur. Der Spiegel CHM kann z.B. in bekannter Weise aus einem Rad bestehen, das proportional zu den Intervallen A und B mit Spiegelflächen und lichtdurchlässigen Leerflächen versehen ist. Die variable Strahlenquelle könnte dabei auch direkt auf dem Spiegel CHM vorgesehen sein. Auf die Verspiegelung der Oberflächen des "Spiegels" CHM könnte dabei natürlich verzichtet werden.

In Fig. 4 ist nebst einem Spiegel CHM ein zusätzlicher Spiegel R vorgesehen. Dabei wird die Strahlung os im Intervall A über das Polygonrad IR-PR und im Intervall B über den Spiegel CHM zum Spiegel R und zurück zum Spiegel CHM und weiter zum Detektor D gespiegelt. Der Strahlengang von der Eingangsoptik EO zum Polygonrad IR-PR zum Detektor D wird daher während dem Intervall B unterbrochen.

Die Drehungen des Polygonrades IR-PR und des Spiegels CHM sind dabei in bekannter Weise zu synchronisieren.

## Patentansprüche

1. Verfahren zur Vermeidung von Abbildungsfehlern in Wärmebildgeräten, die mindestens einen eingangsseitig mit einem Detektor (D) verbundenen Verstärkerkanal (VKn) aufweisen, welchem Detektor (D) abwechslungsweise in einem Intervall A aus der beobachteten Szene über eine Eingangsoptik (EO) aufgenommene Strahlung (os) und in einem Intervall B ein weiteres optisches Signal zugeführt werden, **dadurch gekennzeichnet**, dass der Detektor (D) während dem Intervall B mit einer aus der beobachteten Szene abgeleiteten Strahlung (os) oder einer dazu zumindest annähernd äquivalenten Strahlung (zos) beaufschlagt und/oder dass der Signalweg innerhalb der Verstärkerkanäle (VKn) während dem Intervall B unterbrochen und/oder dass zumindest ein Signalpegel innerhalb des Signalpfades der Verstärkerkanäle (VKn) während dem Intervall B auf einen für alle Verstärkerkanäle (VKn) gemeinsamen Wert eingestellt wird und/oder dass das den Verstärkerkanälen (VKn) zugeführte Eingangssignal während dem Intervall B auf einen Wert beschränkt wird, der annähernd im Bereich der Signalwerte liegt, die während dem Intervall A auftreten können.

2. Verfahren nach Anspruch 1, **dadurch gekennzeichnet**, dass der Weg der Strahlung (os) zum Detektor (D) jeweils während dem Intervall B durch einen Spiegel (CHM) unterbrochen wird, über den ein weiteres optisches Signal vorzugsweise diffus zum Detektor (D) reflektiert wird, das über die erste oder eine weitere Eingangsoptik (EO; EEO) aus dem beobachteten Gelände oder von einer entsprechend der Strahlung (os) eingestellten variablen Strahlenquelle aufgenommen wird.

3. Verfahren nach Anspruch 2, **dadurch gekennzeichnet**, dass die Strahlung (os) während dem Intervall B über den Spiegel (CHM) zu einem Reflektor (R) und von diesem zurück auf den Spiegel (CHM) und weiter zum Detektor (D) gespiegelt wird.

4. Verfahren nach Anspruch 1, 2 oder 3, **dadurch gekennzeichnet**, dass der Wert, auf den jeweils ein Signalpegel innerhalb des Signalpfades für alle Verstärkerkanäle (VKn) eingestellt wird, von einem Kondensator (PC) abgenommen wird, der auf einen für alle Verstärkerkanäle (VKn) während des Intervalles B an dieser Stelle des Signalpfades auftretenden durchschnittlichen Signalwert aufgeladen wie.

5. Verfahren nach einem der vorhergehenden Ansprüche, **dadurch gekennzeichnet**, dass während dem Intervall B ohmsche Ersatzwiderstände anstatt der Elemente des Detektors (D) an die Eingänge der Verstärkerkanäle (VKn) angelegt werden oder das die Empfindlichkeit des Detektor (D) während dem Intervall B vorzugsweise durch Anlegen eines Magnetfeldes reduziert wird.

6. Schaltungsanordnung zur Durchführung des Verfahrens nach Anspruch 1, **dadurch gekennzeichnet**, dass der Detektor (D) galvanisch oder über einen ersten Kondensator (KC1) mit dem Eingang eines Vorverstärkers (VV) verbunden ist, dessen Ausgang galvanisch oder über einen zweiten Kondensator (KC2) und über einen Schalter (AV) mit dem Eingang eines weiteren Verstärkers (ZV) verbindbar ist und/oder dass zumindest einer der Kondensatoren (KC1; KC2) aller Verstärkerkanäle (VKn) über einen Schalter (PPn) mit einem für alle Verstärkerkanäle (VKn) gemeinsamen Kondensator (PC1; PC2) verbindbar ist.
